# EUROPÄISCHE PATENTSCHRIFT

(11) **EP 0 562 337 B1**
(45) Veröffentlichungstag und Bekanntmachung des Hinweises auf die Patenterteilung: **15.05.1996**
(21) Anmeldenummer: 93103631.3
(22) Anmeldetag: 06.03.1993
(51) Int. Cl.: G01N 30/96, B01J 45/00

(54) **Verfahren zum Bestimmen der Konzentration von komplexierten Metall-Ionen in einer Lösung**
Determination process for complexed metal ions in a solution
Procédé de détermination des ions complèxes métalliques en solution

(30) Priorität: 25.03.1992 CH 943/92
(43) Veröffentlichungstag der Anmeldung: 29.09.1993
(73) Patentinhaber: Siemens Schweiz AG, CH-8047 Zürich (CH); SIEMENS AKTIENGESELLSCHAFT, D-80333 München (DE)
(72) Erfinder: Müller, Rudolf, CH-8404 Winterthur (CH); Venclik, Ivan, CH-8905 Arni (CH)

(56) Entgegenhaltungen:
- EP-A- 0 448 831
- EP-A- 0 455 403
- DE-A- 3 340 305
- US-A- 4 357 143
- ANALYTICAL CHEMISTRY Bd. 61, Nr. 6, 15. März 1989, COLUMBUS US Seiten 525 - 529 YAN LIU ET AL. "automated two-column ion exchange system for determination of the speciation of trace metals in natural waters"
- JOURNAL OF CHROMATOGRAPHY Bd. 546, Nr. 1/2, 21. Juni 1991, AMSTERDAM NL Seiten 369 - 380 ROBERT E. SMITH 'ion chromatography in the manufacture of multilayer circuit boards'

## Beschreibung

Die vorliegende Erfindung betrifft ein Verfahren nach dem Oberbegriff des Patentanspruchs 1 sowie eine Anwendung des Verfahrens.

Ein Verfahren zur Analyse von Lösungen, die bei der Herstellung von Leiterplatten verwendet werden, ist in R.E.Smith, Journal of Chromatography 546 (1991) 369-380 offenbart.

In der industriellen Fertigung laufen häufig chemische Prozesse ab - wie beispielsweise beim Ätzen von Leiterplatten -, bei denen die verwendeten Ausgangssubstanzen wohldosiert beigegeben werden müssen, damit die im Prozess entstehenden Lösungssubstanzen entweder möglichst einfach und schnell regeneriert oder aber umweltschonend entsorgt werden können. Um die Dosierung der Ausgangssubstanzen genau abstimmen zu können, müssen die Konzentrationen der verschiedenen Substanzen in der entstehenden Lösung genau bestimmt werden. Insbesondere stellt die bei dem erwähnten Beispiel der Leiterplattenätzung entstehende Lösung, die sowohl schwach als auch stark komplexierte Metall-Ionen enthält, für die Umwelt eine hohe Belastung dar. Besonders die Konzentrationen der stark komplexierten Metall-Ionen, die eine hohe Stabilität aufweisen und demzufolge nur mit zusätzlichen Verfahren eliminiert werden können, müssen genau überwacht und möglichst vom Prozessbeginn an klein gehalten werden. Wird die Konzentration der komplexierten Metall-Ionen in der zu entsorgenden Lösung bestimmt, so können die Ausgangssubstanzen des chemischen Prozesses in der Weise gewählt werden, dass die Lösung keine oder nur wenige, komplexierte Metall-Ionen enthält.

Der vorliegenden Erfindung liegt daher die Aufgabe zugrunde, ein Verfahren zum Bestimmen der Konzentrationen von verschiedenartig vorkommenden, sowohl komplexierten als auch nichtkomplexierten Metall-Ionen in einer Lösung anzugeben.

Diese Aufgabe wird durch die im kennzeichnenden Teil des Patentanspruchs 1 angegebenen Massnahmen gelöst. Vorteilhafte Ausgestaltungen der Erfindung sowie eine Anwendung sind in weiteren Ansprüchen angegeben.

Das erfinderische Verfahren weist folgende Vorteile auf: Durch die im Verfahren erhaltenen Werte für verschiedene Konzentrationen von komplexierten und nicht-komplexierten Metall-Ionen in der durch einen chemischen Prozess entstandenen Lösung können die im chemischen Prozess verwendeten Ausgangssubstanzen derart dosiert werden, dass möglichst kleine Mengen der komplexierten - insbesondere die Umwelt belastenden stark komplexierten - Metall-Ionen entsorgt werden müssen. Auch die Entsorgung gestaltet sich mit Hilfe der durch das Verfahren gewonnenen Information über die Konzentration der in der Lösung vorhandenen umweltschädlichen Substanzen entsprechend effizient, denn auch hier können zur Bindung oder zur Zerstörung der schädlichen Substanzen benötigte Mittel wohldosiert eingesetzt werden.

Die Erfindung wird nachfolgend anhand einer Zeichnung beispielsweise näher erläutert. Sie zeigt ein Verfahren zum Bestimmen von Konzentrationen verschiedenartig komplexierter Kupfer-Ionen in einer Lösung.

Im einzelnen sind zwei wesentliche Verfahrensschritte I und II eines Verfahrens zur Bestimmung von Kupfer-Konzentrationen A, B und C von in Behältern BA, BB und BC enthaltenen Lösungen LA, LB und LC dargestellt. Während im ersten Verfahrensschritt I ein Filter F benötigt wird, kommt im zweiten Verfahrensschritt II eine Chromatographiesäule CS, die mit einem Füllstoff FS gefüllt ist, zum Einsatz. Zwischen den Verfahrensschritten I und II und vor dem ersten bzw. nach dem zweiten Verfahrensschritt I bzw. II sind Messvorrichtungen AA1 bis AA3 vorgesehen, mit denen die Konzentrationen A, B bzw. C der Lösungen LA, LB bzw. LC bestimmt werden. Die Messvorrichtungen AA1 bis AA3 sind beispielsweise nach dem bekannten und häufig eingesetzten Atomabsorptionsverfahren arbeitende Messanordnungen zum Bestimmen von Stoffkonzentrationen in Stoffgemischen oder Lösungen.

Die im Behälter BA enthaltene Lösung LA wird als Probe einem zu untersuchenden Abwasser entnommen, das beispielsweise als unerwünschtes Endprodukt aus einem zum Ätzen von Leiterplatten verwendeten Prozess hervorgeht. Da beim Ätzen von Leiterplatten vorwiegend Kupfer von Leiterplatten entfernt werden muss, ist es naheliegend, dass auch im Abwasser des Ätzprozesses Kupfer enthalten ist. In welcher Form und Menge dieses jedoch vorhanden ist, kann nicht ohne weiteres angegeben werden und muss deshalb analytisch bestimmt werden. Anhand der durch die Messungen erhaltenen Werte kann in einem gewissen Mass wiederum der Prozessablauf beeinflusst werden, d.h. das Ätzverfahren kann mit Hilfe der für das Abwasser bzw. für die Lösung LA ermittelten Kupfer-Konzentrationen A, B und C optimiert werden. Dies muss insbesondere dann vorgenommen werden, wenn umweltgefährdende Substanzen - wie stark komplexierte Kupfer-Ionen - in der Lösung LA vorhanden sind. Aber auch bereits schwach komplexierte Kupfer-Ionen oder an Schwebestoffe gebundenes Kupfer soll gemessen werden, damit auch diese schwermetallhaltigen Substanzen unter Kontrolle gehalten und gezielt aus dem Abwasser entfernt werden können.

Wird nun vor dem ersten Verfahrensschritt I die Kupferkonzentration A mit Hilfe des Atomabsorptionsverfahrens in der Messvorrichtung AA1 bestimmt, so erhält man die Menge des in der Lösung LA gesamthaft vorhandenen Kupfers. Im Verfahrensschritt I wird nun das an Schwebestoffe gebundene Kupfer durch Filtrieren der Lösung LA im Filter F eliminiert. Dies führt zu der im Behälter BB enthaltenen Lösung LB. In diesem Stadium des Verfahrens wird auch hier mit Hilfe des Atomabsorptionsverfahrens die Kupferkonzentration bestimmt. Die erhaltene Konzentration B entspricht der Kupferkonzentration in der Lösung LA ohne das an Schwebestoffe gebundene Kupfer.

Im zweiten Verfahrensschritt II wird die im Behälter BB enthaltene Lösung LB in die mit dem Füllstoff FS gefüllte Chromatographiesäule CS gegeben, um sowohl die schwach komplexierten als auch die in der Lösung LB einzeln vorkommenden Kupfer-Ionen zu eliminieren. Dies wird durch die Wahl der Komplexkonstanten des in der Chromatographiesäule CS enthaltenen Füllstoffes FS erreicht: Ist die Komplexkonstante des Füllstoffes FS kleiner als die der stark komplexierten und grösser als die der schwach komplexierten Kupfer-Ionen, so werden alle schwach komplexierten Kupfer-Ionen in der Chromatographiesäule CS zurückgehalten und alle stark komplexierten Kupfer-Ionen passieren die Chromatographiesäule CS. Als Komplexbildner wird - nicht nur in Leiterplattenätzverfahren - häufig Ethylendiamintetraacetat (EDTA) eingesetzt, das einer der stärksten bekannten Komplexbildner ist. EDTA bildet mit Metall-Ionen Chelatkomplexe, die aufgrund ihrer oktaedrischen Struktur besonders stabil und deshalb auch schwer biologisch abbaubar sind. Mit Kupfer bildet das EDTA einen Komplex mit einer Komplexkonstanten 18, was bedeutet, dass die Komplexkonstante des Füllstoffs FS kleiner als 18 sein muss, damit in der Lösung LC nur noch Cu-EDTA-Komplexe oder andere Komplexe, die eine Komplexkonstante von 18 oder höher aufweisen, vorkommen. Ein solcher Füllstoff FS ist beispielsweise Iminodiessigsäure, die für Kupfer eine Komplexkonstante von 16 aufweist.

Die im Behälter BC aufgefangene Lösung LC wird der Messvorrichtung AA3 zugeführt, mit der die Konzentration C, d.h. die Konzentration des stark komplexierten Kupfers in der Lösung LC, bestimmt wird.

Die drei ermittelten Konzentrationen A, B und C bilden die Grundlage, um weitere wesentliche Konzentrationen D und E berechnen zu können. So ergibt sich erstens die Kupferkonzentration D, die das an die Schwebestoffe gebundene Kupfer repräsentiert, aus der Differenz zwischen den Konzentrationen A und B. Zweitens erhält man die Konzentration E, welche die schwach komplexierten Kupfer-Ionen repräsentiert, aus der Differenz zwischen den Konzentrationen B und C.

Zur Unterscheidung von mehreren unterschiedlich stark komplexierten Metall-Ionen in der Lösung LA werden mehrere Chromatographiesäulen CS mit Füllstoffen FS, die unterschiedliche Komplexkonstanten aufweisen, verwendet. Werden beispielsweise drei Chromatographiesäulen CS, die Füllstoffe FS mit Komplexkonstanten 8, 14 und 16 aufweisen, verwendet, so können die Konzentrationen der verschieden stark komplexierten Metall-Ionen bestimmt werden. Es wird also nicht nur zwischen stark und schwach komplexierten Metall-Ionen unterschieden, sondern auch zwischen schwach, mittel und stark komplexierten Metall-Ionen.

Sollen nur die stark komplexierten Metall-Ionen in der Lösung LA bestimmt werden, so kann auf den ersten Verfahrensschritt I verzichtet werden und die Lösung LA direkt der Chromatographiesäule CS zugeführt werden. Da nur stark komplexierte Metall-Ionen die Chromatographiesäule CS passieren, kann auch hier die Konzentration C mit der nach dem Atomabsorptionsverfahren arbeitenden Messvorrichtung AA3 bestimmt werden.

Das erfindungsgemässe Verfahren ist nicht nur zum Bestimmen der Konzentration von durch komplexierte Kupfer-Ionen gebildeten Komplexen anwendbar. Vielmehr kann das Verfahren ganz allgemein zur Konzentrationsbestimmung von komplexierten Metall-Ionen in Lösungen eingesetzt werden.

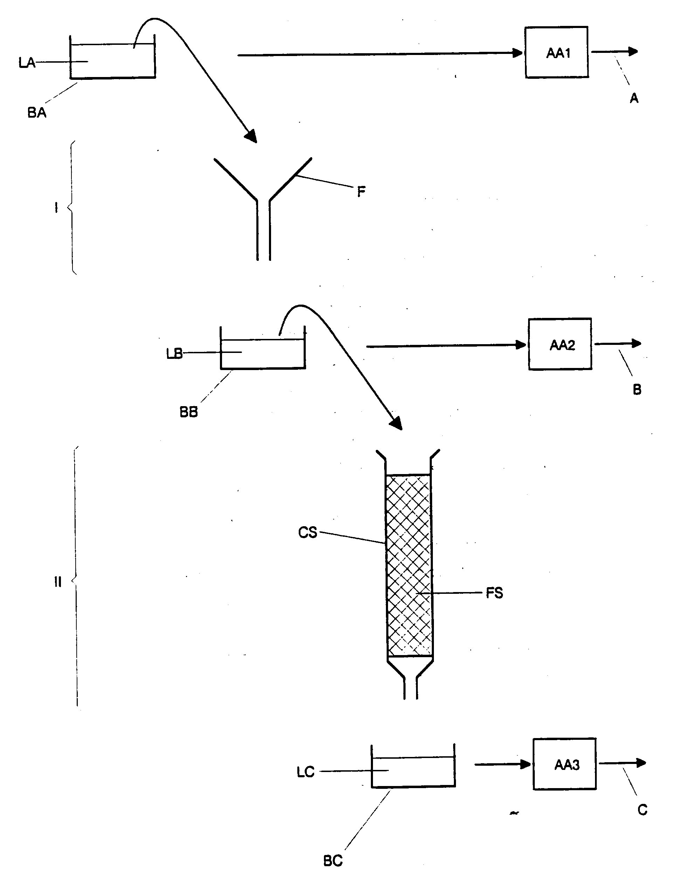

## Patentansprüche

1. Verfahren zum Bestimmen einer Konzentration (C) von komplexierten Metall-Ionen in einer Lösung (LA) mit Hilfe einer Messvorrichtung (AA3), **dadurch gekennzeichnet**, dass die Lösung (LA) in eine Chromatographiesäule (CS) mit einem Füllstoff (FS) gegeben wird, der eine Komplexkonstante aufweist, deren Wert zwischen der Komplexkonstanten der stark komplexierten und der schwach komplexierten Metall-Ionen der Lösung (LA) liegt und dass die Konzentration (C) von die Chromatographiesäule (CS) passierenden, stark komplexierten Metall-Ionen in einer durch das Chromatographieverfahren erhaltenen Lösung (LC) anschliessend mit der Messvorrichtung (AA3) bestimmt wird.

2. Verfahren nach Anspruch 1, **dadurch gekennzeichnet**, dass mit Hilfe mehrerer Chromatographiesäulen (CS) mit Füllstoffen (FS) unterschiedlicher Komplexkonstanten mehrere Konzentrationen (C) von unterschiedlich stark komplexierten Metall-Ionen in der Ausgangslösung (LA) bestimmt werden.

3. Verfahren nach Anspruch 1, **dadurch gekennzeichnet**, dass zum Bestimmen einer Konzentration von schwach komplexierten Metall-Ionen in der Lösung (LA) vor der zum Bestimmen der Konzentration (C) vorgenommene Isolierung der in der Lösung (LA) vorkommenden stark komplexierten Metall-Ionen mit der Chromatographiesäule (CS) die Lösung (LA) in einem Filter (F) gefiltert wird und in der den Filter (F) passierenden Lösung (LB) die Metall-Ionen-Konzentration (B) mit einer Messvorrichtung (AA2) bestimmt wird und dass die Konzentration der schwach komplexierten Metall-Ionen in der Lösung (LA) aus der Differenz zwischen den Konzentrationen (B) und (C) berechnet wird.

4. Verfahren nach Anspruch 3, **dadurch gekennzeichnet**, dass zum Bestimmen einer Konzentration von an Schwebestoffe gebundenen Metall-Ionen in der Lösung (LA) vor der zum Bestimmen der Konzentration (B) vorgenommenen Filtrierung der Lösung (LA) eine Konzentration (A) von in der Lösung (LA) vorhandenen Metall-Ionen mit einer Messvorrichtung (AA1) bestimmt wird und dass die Konzentration von an Schwebestoffe gebundenen Metall-Ionen in der Lösung (LA) aus der Differenz zwischen den Konzentrationen (B) und (A) berechnet wird.

5. Anwendung des Verfahrens nach einem der Ansprüche 1 bis 4 zum Bestimmen einer oder verschiedener Konzentrationen von Metall-Ionen in Abwässern.

## Claims

1. Method for determining a concentration (C) of complex metal ions in a solution (LA) with the aid of a measuring device (AA3), characterised in that the solution (LA) is put into a chromatography column (CS) having a filling material (FS) which has a complex constant, the value of which lies between the complex constants of the strongly complex metal ions and the slightly complex metal ions of the solution (LA), and in that the concentration (C) of strongly complex metal ions, which pass through the chromatography column (CS), in a solution (LC) obtained by the chromatography method, is subsequently determined with the measuring device (AA3).

2. Method according to claim 1, characterised in that with the aid of a plurality of chromatography columns (CS) having filling materials (FS) which have varying complex constants, a plurality of concentrations (C) of varyingly strongly complex metal ions in the original solution (LA) can be determined.

3. Method according to claim 1, characterised in that in order to determine a concentration of slightly complex metal ions in the solution (LA) before the isolation of the strongly complex metal ions present in the solution (LA) using the chromatography column (CS), which isolation is carried out in order to determine the concentration (C), the solution (LA) is filtered in a filter (F) and the metal ion concentration (B) in the solution (LB), which passes through the filter (F), is determined with a measuring device (AA2), and in that the concentration of slightly complex metal ions in the solution (LA) is calculated from the difference between the concentrations (B) and (C).

4. Method according to claim 3, characterised in that in order to determine a concentration of metal ions attached to suspended matter in the solution (LA) before the filtering of the solution (LA) which is carried out in order to determine the concentration (B), a concentration (A) of metal ions present in the solution (LA) is determined with a measuring device (AA1), and in that the concentration of metal ions in the solution (LA) which are attached to suspended matter is calculated from the difference between the concentrations (B) and (A).

5. Application of the method according to one of the claims 1 to 4 for determining one or various concentrations of metal ions in waste water.

## Revendications

1. Procédé de détermination d'une concentration (C) d'ions métalliques complexés dans une solution (LA) à l'aide d'un dispositif de mesure (AA3), caractérisé en ce qu'on verse la solution (LA) dans une colonne chromatographique (CS) avec une charge (FS) qui présente une constante de complexation dont la valeur se situe entre les constantes de complexation des ions métalliques fortement complexés et des ions métalliques faiblement complexés et en ce qu'on détermine ensuite la concentration (C) des ions métalliques fortement complexés, traversant la colonne chromatographique, dans une solution (LC) obtenue dans le procédé chromatographique avec le dispositif de mesure (AA3).

2. Procédé selon la revendication 1, caractérisé en ce qu'on détermine dans la solution de départ (LA), à l'aide de plusieurs colonnes chromatographiques (CS) avec des charges (FS) de constantes de complexation différentes, plusieurs concentrations (C) d'ions métalliques complexés fortement de manière différente.

3. Procédé selon la revendication 1, caractérisé en ce que pour la détermination d'une concentration d'ions métalliques faiblement complexés dans la solution (LA), avant l'isolement effectué pour la détermination de la concentration (C) des ions métalliques fortement complexés existant dans la solution (LA) avec la colonne chromatographique (CS), on filtre la solution (LA) sur un filtre (F) et on détermine dans la solution (LB) traversant le filtre (F) la concentration en ions métalliques (B) avec un dispositif de mesure (AA2) et en ce qu'on calcule la concentration des ions métalliques faiblement complexés dans la solution (LA) à partir de la différence entre les concentrations (B) et (C).

4. Procédé selon la revendication 3, caractérisé en ce que pour la détermination d'une concentration d'ions métalliques liés à des substances en suspension dans la solution (LA) avant la filtration de la solution (LA) effectuée pour la détermination de la concentration (B), on détermine une concentration (A) d'ions métalliques présents dans la solution (LA) avec un dispositif de mesure (AA1) et en ce qu'on calcule la concentration d'ions métalliques liés à des substances en suspension dans la solution (LA) à partir de la différence entre les concentrations (B) et (A).

5. Utilisation du procédé selon l'une des revendications 1 à 4 pour la détermination d'une concentration de concentrations différentes d'ions métalliques dans des eaux résiduaires.
